Europäisches Patentamt

European Patent Office

Office européen des brevets

(11) Publication number: **0 235 092**
A1

## (12) EUROPEAN PATENT APPLICATION

(21) Application number: 87830004.5

(22) Date of filing: 09.01.87

(51) Int. Cl.³: **F 24 C 3/00**
**F 24 H 3/04**

(30) Priority: 04.02.86 IT 2082186 U

(43) Date of publication of application:
02.09.87 Bulletin 87/36

(84) Designated Contracting States:
AT BE DE ES FR GB NL

(71) Applicant: FERROLI INDUSTRIE RISCALDAMENTO
S.p.A.
Via Ritonda, 78/A
I-37047 San Bonifacio (Verona)(IT)

(72) Inventor: Ferroli, Dante FERROLI INDUSTRIE
RISCALDAMENTO SpA
Via Ritonda, 78/A
I-37047 San Bonifacio (Verona)(IT)

(74) Representative: Cicogna, Franco
Ufficio Internazionale Brevetti Dott.Prof. Franco Cicogna
Via Visconti di Modrone, 14/A
I-20122 Milano(IT)

(54) Device for self-adjusting the flow rate of the combustion air in a gas supplied heat generator with an atmospheric burner and a tight chamber.

(57) There is disclosed a device for automatically adjusting the flow rate of the combustion air in a gas-supplied heat generator, comprising a first chamber (4) therein a fan (5) is arranged for supplying the combustion air communicating, through calibrated holes (8), with a chamber (9) for supplying combustion air to a burner (2) and, through an adjustable valve, (12) with a second chamber (10) thereto a duct (14) leads for discharging the combustion fumes.

Fig. 1

EP 0 235 092 A1

Croydon Printing Company Ltd

The present invention relates to a device for self-adjusting the flow rate of combustion air in a gas-supplied heat generator including an atmospheric burner and a tight chamber.

As is known, in the so-called tight chamber heat generators, the combustion air is not sucked from the room thereat the burners are installed, but directly from the atmosphere, and the combustion products are evacuated through a duct the length of which is as small as possible, instead of being evacuated through the conventional flue.

The known devices are usually made according two different making methods, that is balanced flow burners in which the suction and evacuation of air and fumes occur naturally and forced-flow burners in which said suction and evacuation are aided by a fan.

The first approach of balanced flow burners does not give satisfactory results and its design is comparatively limited in its performance.

The second approach, that is that of the forced flow burners, generally provides some advantages mainly consisting of the possibility of using reduced cross-section ducts for air suction and evacuation purposes, and the possibility of using ducts and pipes the length of which is exclusively limited by the head and flow rate capability of the air processing fan.

The possibility of varying the length of the ducts or pipes originates the problem of holding the combustion air flow rate constant as the load losses vary through the ducts, which load losses are caused by the length differences changing from system to system.

Presently commercially available devices, on the other hand, do not satisfactorily solve the above mentioned problem since known devices necessarily use, in most cases, given length ducts or pipes in order not to substantially vary the use conditions of the burner.

Accordingly, the task of the present invention is to overcome the above mentioned problem, by providing a self-adjusting device able of solving, in an automatic way, the mentioned problem, which device is completely devoid of any calibration requirements.

Another object of the present invention is to provide a flow-rate adjusting device, to be applied to a gas supplied heat generator including an atmospheric burner and a tight chamber which is very reliable in operation.

Yet another object of the present invention is to provide such a self-adjusting device which can be made by using easily commercially available elements and materials and which, moreover, has a comparatively reduced cost.

According to one aspect of the present invention, the above task and objects, as well as yet other objects, which will become more apparent thereinafter, are achieved by a device for automatically adjusting the flow-rate of combustion air in a gas-supplied heat generator, including an atmospheric burner and a tight chamber, comprising a heat exchanger and a gas burner, arranged in an enclosed envelope, characterized in that it further comprises a first chamber therein a fan is arranged for supplying combustion air, said first chamber communicating, through calibrated holes, with a chamber for supplying combustion air to said burner and, through an adjustable valve, with a second chamber thereto a duct leads for discharging the combustion fumes coming from said envelope.

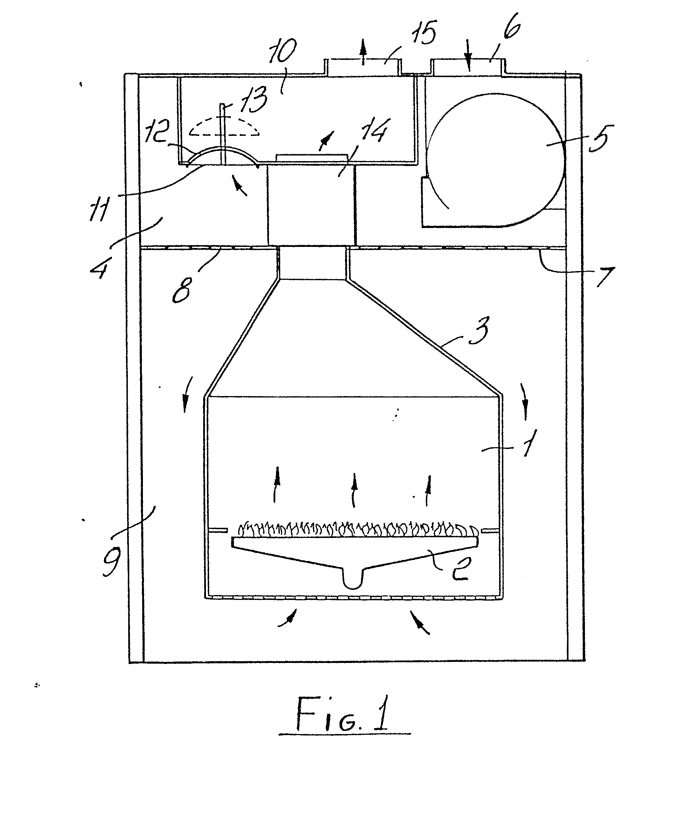

Further characteristics and advantages of the invention will become more apparent from the following detailed disclosure of a device for automatically adjusting the combustion air flow-rate being illustrated, by way of a non limitative example with reference to the accompanying drawing the sole figure of which illustrates the gas supplied heat generator, including an atmospheric burner and a tight chamber, as seen schematically in cross-section.

With reference to the figure, the device for automatically adjusting the flow-rate of the combustion air in a gas supplied heat generator, with atmospheric burner and tight chamber, according to the present invention, comprises a heat exchanger 1, which is arranged above a gas-supplied burner 2.

The heat exchanger and gas burner are enclosed within an envelope or casing 3, of the so-called tightness type.

On the top of the envelope 3 there is defined a first chamber 4 in which a fan 5 operates which has its inlet or sucking port 6 turned to the outside.

The first chamber 4 is closed at the bottom, that is toward the envelope or casing 3, by a diaphragm 7 therethrough there are formed calibrated holes for communication with a chamber for supplying combustion air 9, which communicates with the bottom portion of the envelope 3 for sending the combustion air to the burner 2.

The device further comprises a second chamber 10 which is separated from the first chamber 4 through a port 1, thereon an adjustable valve operates which advantageously consists of a gravity bell 12 vertically movable and driven by a rod member 13.

To the second chamber 10 a duct leads for discharging combustion fumes 14 coming from the envelope 3 and which is provided with a discharging port 15 for evacuating to the outside the discharging fumes.

The fan 5 arranged in the chamber 4 is so designed as to provide the necessary combustion air flow rate for a proper operation of the apparatus, depending on the maximum size of the air suction pipe, which size is imposed by the system manufacturer.

Air, which is sucked by the fan through the suction inlet 6 enters the chamber 4 and, through the calibrated holes 8, enters the air supplying chamber 9 and therefrom passes to the combustion chamber therein the burner 2 is arranged.

The fume path is through the heat exchanger 1, discharging duct or pipe 14, second chamber 10 and discharging port to the outside.

The hole or port 11, formed between the first chamber 4 and second chamber 10 is controlled, as aforesaid, by the bell 12 which may be adjusted so as to provide a preset pressure difference between the first and second chambers, depending on the fan characteristics.

Accordingly, also the pressure difference between the first chamber 4 and supplying chamber 9 is held constant thereby, as the fan sends combustion air to the first chamber, the bell 12 either opens or closes the port 11, so as to allow for a given amount of air to pass between the first and second chambers to hold therebetween the preset pressure differential.

Thus, since the pressure differential between the first chamber and the supply chamber is constant, through the calibrated holes 8 a constant flow-rate combustion air will be supplied to the combustion air, independently from possible load losses due to the length of the ducts, provided that said ducts have lengths included between the maximum and minimum length imposed by the manufacturer.

From the above disclosure it should be apparent that the invention fully achieves the intended task and objects.

In particular, it should be pointed out that an adjusting device has been provided, which, owing to the provision of an adjustable valve holding the pressure difference between the first and second chambers constant, affords the possibility of compensating possible load or charge losses, thereby supplying the combustion chamber with a constant flow rate, so as to optimize the operation and efficiency of the heat generator.

Another important aspect of the invention, moreover, consists of the fact that the improved efficiency of the apparatus is achieved by very simple and easily adjustable means.

In practicing the invention, the used materials, provided that they are compatible to the intended use, may be any according to requirements.

0235092

## C L A I M S

1- A device for automatically adjusting the flow-rate of combustion air in a gas -supplied heat generator,including an atmospheric burner and a tight chamber,comprising a heat exchanger and a gas burner,arranged in an enclosed envelope,characterized in that it further comprises a first chamber therein a fan is arranged for supplying combustion air,said first chamber communicating,through calibrated holes,with a chamber for supplying combustion air to said burner and,through an adjustable valve,with a second chamber thereto a duct leads for discharging the combustion fumes coming from said envelope.

2- A device for automatically adjusting the flow-rate of combustion air,according to the preceding claim,characterized in that said adjustable valve controls a port communicating the first chamber and the second chamber.

3- A device for automatically adjusting the flow-rate of combustion air,according to the preceding claims,characterized in that said adjustable valve consists of a movable chamber the displacement of which is controlled by a vertically extending rod.

0235092

4- A device for automatically adjusting the flow-rate of combustion air according to one or more of the preceding claims,characterized in that the port between the first and second chambers,as controlled by a bell member,is able of bypassing a portion of the air impelled by the fan in order to hold,between the first chamber and second chamber,a constant pressure difference and consequently a constant pressure difference between the first chamber and supply chamber,thereby holding at a constant value the flow-rate of the combustion air.

5- A device for automatically adjusting the flow-rate of combustion air according to one or more of the preceding claims,and substantially as disclosed and illustrated in the preceding disclosure and accompanying drawing for the intended objects.

0235092

Fig. 1

0235092

# EUROPEAN SEARCH REPORT

European Patent Office

Application number

EP 87 83 0004

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | FR-A-1 314 340 (PERKINS)<br>* Page 3, abstract; figures * | 1 | F 24 C 3/00<br>F 24 H 3/04 |
| | --- | | |
| A | FR-A-2 300 968 (HURTEAU)<br>* Page 4, lines 1-22; figure 1 * | 1 | |
| | --- | | |
| A | PATENT ABSTRACTS OF JAPAN, vol. 8, no. 76 (M-288)[1513], 9th April 1984; & JP-A-58 221 314 (GASSTAR K.K.) 23-12-1983 | 1 | |
| | --- | | |
| A | DE-A-2 003 173 (WELDOTRON CORP.) | | |
| | ----- | | |

**TECHNICAL FIELDS SEARCHED (Int Cl 4)**

F 24 C
F 24 H
F 23 N
F 23 L

The present search report has been drawn up for all claims

| Place of search | Date of completion of the search | Examiner |
|---|---|---|
| THE HAGUE | 07-05-1987 | VANHEUSDEN J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82